Europäisches Patentamt

**European Patent Office**

**Office européen des brevets**

(19)

(11) Veröffentlichungsnummer: **0 142 643**
**A2**

(12)

# EUROPÄISCHE PATENTANMELDUNG

(21) Anmeldenummer: 84110161.1

(22) Anmeldetag: 25.08.84

(51) Int. Cl.⁴: **A 01 G 9/14**

(30) Priorität: 27.08.83 DE 3330922

(43) Veröffentlichungstag der Anmeldung:
29.05.85 Patentblatt 85/22

(84) Benannte Vertragsstaaten:
AT BE CH DE FR GB IT LI LU NL SE

(71) Anmelder: Rollax Ingegneria SA
Certenago
CH-6926 Montagnola(CH)

(72) Erfinder: Treyde, Alexander
Certenago
CH-6926 Montagnola(CH)

(74) Vertreter: Rottmann, Maximilian R.
Hug Interlizenz AG Alte Zürcherstrasse 49
CH-8903 Birmensdorf/ZH(CH)

(54) Anordnung für die Lagerung, die Behandlung und den Umschlag von Pflanzen.

(57) Die vorliegende Erfindung betrifft eine Anordnung für die Lagerung, die Behandlung und den Umschlag von Pflanzen.

Ein Lagergebäude (1) ist in eine Mehrzahl von räumlich getrennten Abteilungen (I–IV) gegliedert, wobei jede Abteilung Regalfächer zur Aufname von Pflanzenträgern (3) besitzt. Innerhalb des Lagergebäudes (1) ist eine Transport- und Umsetzeinrichtung (7) vorgesehen, welche Pflanzenträger (3) von einer der Abteilungen in eine andere transportiert. Die Pflanzenträger (3) sind unter sich insofern gleich ausgebildet, als sie einen innerhalb der Anlage identischen Fahrschemel sowie einen darauf aufgesetzten Trog zur Aufnahme der Pflanzen umfassen, welch letzterer in Form und/oder Ausführung an die Pflanzen angepasst ist. Steuermittel bewirken nach einem vorgewählten Programm den Umsatz der Pflanzenträger von der einen in die andere Abteilung; die einzelnen Abteilungen unterscheiden sich dabei voneinander durch unterschiedliche Ausbildung in Bezug auf Licht–, Klima– und Feuchtigkeitsverhältnisse.

EP 0 142 643 A2

./...

Croydon Printing Company Ltd.

FIG. 1

# ANORDNUNG FÜR DIE LAGERUNG, DIE BEHANDLUNG UND DEN UMSCHLAG VON PFLANZEN

-------------------------------------------------------------

Die vorliegende Erfindung bezieht sich auf eine Anordnung für die Lagerung, die Behandlung und den Umschlag von Pflanzen.

Ausgehend von der Tatsache, dass einzelne Pflanzensetzlinge, insbesondere in gewerbsmässigem oder industriellem Masstab, einer eingehenden Pflege und Behandlung bedürfen, ist als bisher nicht beseitigter Nachteil festzuhalten, dass diese im folgenden generell als "Handhabung der Pflanzen" bezeichneten Vorgänge ausgesprochen arbeits- und zeitintensiv sind. Vom gewerblichen bzw. industriellen Standpunkt aus gesehen ist dies natürlich ein unerwünschter Zustand. Andererseits lässt sich nicht vermeiden, dass jeder einzelne Pflanzensetzling naturgemäss eine gewisse Zeit und auch gewisse Randbedingungen benötigt, um zu einer kommerziell auszuwertenden Form auszuwachsen, z.B. zu einer Form, in der der einzelne Setzling bzw. die Jungpflanze oder aber eine ausgewachsene Pflanze verkauft und vom Endverbraucher benützt, d.h. entweder zwecks weiterem Wachstums eingepflanzt oder zwecks Verbrauchs konsumiert werden kann.

Es ist bekannt und seit langem gebräuchlich, Pflanzen in Gewächs- bzw. Treibhäusern aufzuziehen; dieses Vorgehen hat sich im gewerblichen Massstab trotz relativ hoher Arbeitsintensität durchgesetzt. Für die Handhabung von Pflanzen im industriellen Massstab hingegen wird auch dieses Vorgehen fragwürdig, insbesondere
wegen der aufzuwendenden Arbeitszeit.

Es ist eine Aufgabe der vorliegenden Erfindung, grundsätzlich
eine Lösung für die zuvor angesprochenen Probleme vorzuschlagen,
nämlich eine Anordnung zur Vereinfachung in der Handhabung von
Pflanzen, die es gestattet, auch in gewerblichem und insbesondere
in industriellem Massstab Pflanzen aufzuziehen, ohne dass in
wirtschaftlich untragbarer Hinsicht allzu grosse, kostenmässige
bzw. Zeit-Aufwendungen erforderlich wären. Ausserdem soll mit der
vorliegenden Erfindung gleichzeitig eine Möglichkeit geschaffen
werden, die Handhabung der Pflanzen in bezug auf den Güterumschlag rationeller zu gestalten.

Zur Lösung der erfindungsgemässen Aufgabe geht die Erfindung von
einer Anordnung für die Lagerung, die Behandlung und den Umschlag
von Pflanzen aus, die gemäss der Erfindung gekennzeichnet ist
durch:

- eine Mehrzahl von unter sich zumindest annähernd gleichen
  Pflanzenträgern zur artsgruppenweisen Aufnahme einer Vielzahl von Einzelpflanzen;

- ein Lagergebäude, das in eine Mehrzahl von räumlich getrennte Abteilungen gegliedert ist, welche je mit Mitteln
  zur Aufnahme von zumindest einem Pflanzenträger ausgerüstet sind und welches eine Ein- und Ausgabestelle für die

Pflanzenträger umfasst;

- Transportmittel zum Umschlag von Pflanzenträgern zwischen
  den einzelnen räumlich getrennten Abteilungen bzw. zwischen diesen und der Ein- und Ausgabestelle; sowie

- Steuermittel zur Steuerung des Bewegungsablaufes der
  Transportmittel zwischen den einzelnen räumlich getrennten Abteilung bzw. zwischen diesen und der Ein- und Ausgabestelle.

Auf diese Weise sind die Voraussetzungen geschaffen, dass von
einem oder mehreren Pflanzenträgern jeweils eine Gruppe von zu
behandelnden Pflanzen aufgenommen werden kann, jeweils artsgruppenweise sortiert. Diese Pflanzenträger werden sodann mit
Hilfe der Transportmittel zunächst in eine erste Abteilung, nach
einer gewissen Zeit in eine zweite Abteilung usw. verschoben, in
der Weise, dass die in den Pflanzenträgern vorhandenen Pflanzensetzlinge bzw. Jungpflanzen jeweils das für ihr Wachstum optimal
geeignete Klima bzw. die optimalen Bedingungen vorfinden.

Im Interesse einer rationellen Gestaltung der gesamten Anordung
ist es angezeigt, dass die Pflanzenträger zweiteilig ausgebildet
sind, indem sie

  - einen ersten, die einzelnen Pflanzen aufnehmenden Trog
    aufweisen, der in Art und/oder Grösse an die Planzen angepasst ist, und

- einen zweiten, den Trog abstützenden, innerhalb der Anlage zumindest funktionell identisch ausgebildeten Teil
  aufweisen, auf welchen die einzelnen Träger aufsetzbar
  sind.

Damit ist sichergestellt, dass die gesamte Anlage von der Funktion und von der Steuerung her einfach aufgebaut werden kann, da
die unmittelbar mit der Anlage in Wirkungsverbindung tretenden,
die Tröge tragenden Teile einheitlich ausgebildet sind. Es empfiehlt sich, die genannten, die Tröge abstützenden Teile als
Fahrschemel mit einem Tragrahmen und mit vier Rollen auszubilden,
in der Weise, dass die funktionellen Abmessungen des Rahmens und
die Anordnung der Rollen bei allen Fahrschemeln identisch ist.
Diese Massnahme gewährleistet weiter einen einheitlichen, funktionssicheren Aufbau der gesamten Anlage, insbesondere im Hinblick auf die Ausbildung der erfindungsgemäss vorgesehenen Transportmittel.

Die Mittel zur Aufnahme des bzw. der Pflanzenträger können bei
einem bevorzugten Ausführungsbeispiel durch mit Schienen ausgerüstete Regalfächer gebildet sein, welche die Pflanzenträger aufzunehmen bestimmt und zumindest einseitig offen sind. Wenn diese
Regalfächer als einseitig offene Einschub-Regalfächer ausgebildet
sind, können sie durch ein frontseitig verfahrbares Regalförderzeug zwecks Ein- und Auslagerung der Pflanzenträger bedienbar
sein. Eine andere Möglichkeit besteht darin, die Regalfächer als
zweiseitig offene Durchlauf-Regalfächer auszubilden, die durch
ein Regalförderzeug rückseitig zwecks Einlagerung und durch dasselbe und/oder ein zweites Regalförderzeug frontseitig zwecks
Auslagerung bedienbar sind.

Jedenfalls hat es sich als besonders vorteilhaft erwiesen, wenn
die im Regalfach bzw. in den Regalfächern angeordneten Schienen
zur frontseitigen Öffnung hin geneigt angeordnet sind. Dies
bietet besondere Vorteile, wenn die Neigung so gering gewählt
ist, dass ein selbsttätiges Anlaufen der die Pflanzentröge
tragenden Fahrschemel verhindert, jedoch eine weitgehende Kompensation der Rollwiderstände der Fahrschemel beim Entnehmen derselben aus dem Regalfach gewährleistet ist.

Im Sinne des Erfindungsgedankens kann bei einer Ausgestaltung
der Anordnung vorgesehen sein, dass innerhalb des Lagergebäudes

- zumindest eine der räumlich getrennten Abteilungen mit
  Fenstern,
- zumindest eine der räumlich getrennten Abteilungen verdunkelt,
- zumindest eine der räumlich getrennten Abteilungen klimatisiert, und/oder
- zumindest eine der räumlich getrennten Abteilung mit einer
  Wasser-Berieselungsvorrichtung versehen ist.

Die Transportmittel zum Umschlag von Pflanzenträgern können eine
oder mehrere, an sich bekannte, in einer Horizontalebene in zwei
Richtungen verfahrbare, heb- und senkbare Fördervorrichtung
umfassen. Zur Steuerung derselben können die Steuermittel ein programmierbares, selbstätiges Zeitsteuerorgan umfassen, welches
den Umschlag von ausgewählten Pflanzenträgern von einer oder
mehreren Abteilungen des Lagergebäudes in eine oder mehrere,
andere Abteilungen des Lagergebäudes bewirkt.

Dadurch kann erreicht werden, dass automatisch eine Umwälzung der
Pflanzenträger innerhalb des Lagergebäudes stattfindet, z.B.
indem eine Gruppe von Pflanzenträgern zunächst während einer
gewissen Zeit einer Besonnung, dann während einer gewissen Zeit
einer Verdunkelung, anschliessend vielleicht einer Berieselung
usw. ausgesetzt wird, ohne dass ein menschliches Zutun erforderlich wäre. Somit wird jede Pflanzengruppe, durch zweckmässige
Einstellung des Zeitsteuerorgans, die für sie optimalen Umweltbedingungen vorfinden, was schliesslich dem Wachstum und der Pflanzenqualität zugute kommen wird.

Schliesslich kann es angezeigt sein, wenn die Steuermittel ausserdem ein programmierbares, selbstätiges Zeitsteuerorgan zur
wahlweisen Ein- und Ausschaltung von Heiz- und/oder Kühlaggregaten, Wasserberieselungsanlagen oder dgl. umfassen, um z.B. während einer Umwälzungsphase die Heizung bzw. Kühlung, die Berieselung usw. zeitweise auszuschalten. Diese Massnahmen stellen eine
weitere Vereinfachung bzw. einen weiteren Schritt in Richtung
eines weitgehend automatischen Betriebs der gesamten Anordnung
dar. Selbstverständlich sind weitere Varianten und Ergänzungen
denkbar, die im Rahmen des Wissens eines einschlägigen Fachmannes liegen dürften.

- 7 -                                    0142643

Im folgenden werden Ausführungsbeispiele der erfindungsgemässen
Anordnung, unter Bezugnahme auf die beiliegenden, schematischen
Zeichnungen, näher erläutert. Im einzelnen zeigen:

Fig. 1     eine Gesamtansicht eines ersten Ausführungsbeispieles der erfindungsgemässen Anordnung, teilweise aufgebrochen,

Fig. 2     eine Gesamtansicht eines zweiten Ausführungsbeispieles der erfindungsgemässen Anordnung,

Fig. 3     einen Vertikalschnitt durch die Anordnung gemäss
           Fig.2,

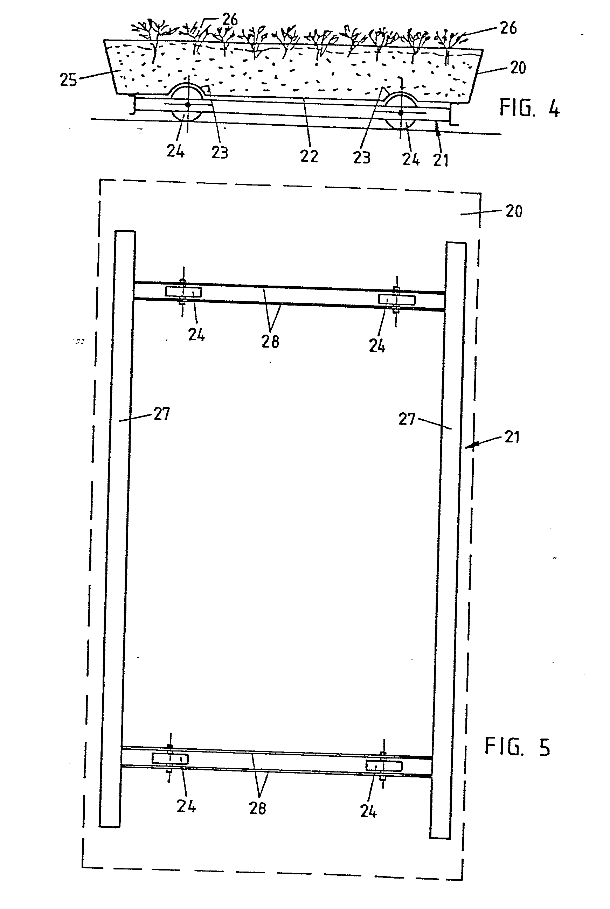

Fig.4      eine Seitenansicht eines Pflanzenträgers, und

Fig.5      eine Ansicht eines Rolluntersatzes, der einen Bestandteil des Pflanzenträgers bildet, von oben.

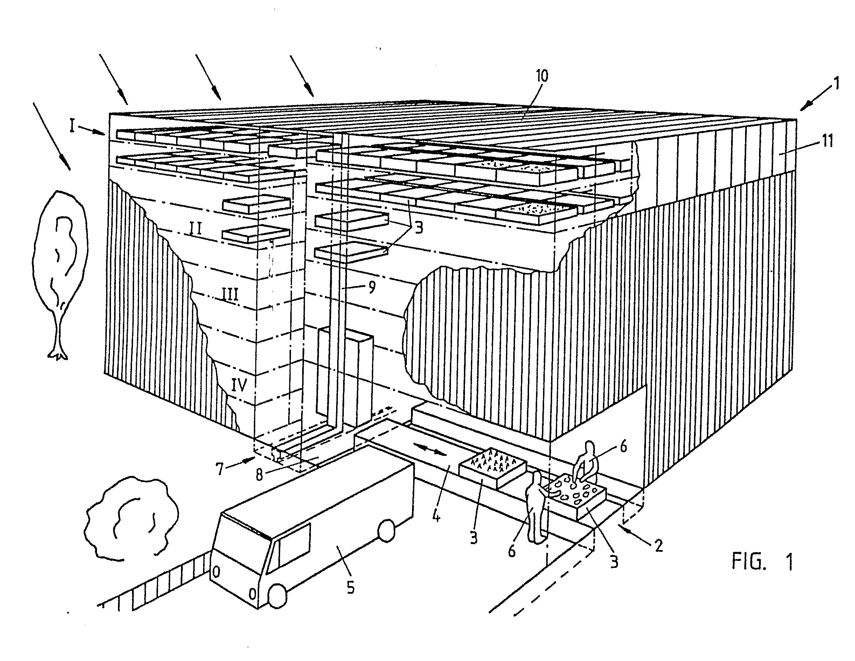

Im folgenden wird zunächst auf Fig. 1 bezug genommen, in welcher
der generelle Aufbau eines Ausführungsbeispiels der erfindungsgemässen Anordnung dargestellt ist. Ein generell mit 1 bezeichnetes
Lagergebäude beinhaltet eine Ein- und Ausgabestelle 2, bei welcher manuell Pflanzenträger 3 bearbeitet bzw. zur Ein- oder
Auslagerung vorbereitet werden. Im Bereich dieser Ein- und Ausgabestelle 2 kann zweckmässigerweise ein Förderband 4 vorgesehen
sein, welches den Transport der Pflanzenträger 3 einerseits zwischen Zulieferfahrzeug 5 und Bedienungspersonen 6 und andererseits zwischen letzterer und einem generell mit 7 bezeichneten
Regalförderzeug sicherstellt.


Das Regalförderzeug 7 kann in bekannter Weise eine heb- und
senkbare Förderplattform 8 zur Aufnahme der Pflanzenträger 3
sowie einen Fördermast 9 umfassen, mit Hilfe dessen die Förderplattform 8 in eine Mehrzahl von Lageretagen verschoben werden
kann. Ausserdem versteht sich, dass das Förderfahrzeug 7 entlang
einer horizontalen Ebene in zwei zueinander senkrechten Richtungen verfahrbar ist, um die einzelnen Einlagerungspositionen
innerhalb des Lagergebäudes 1 zu erreichen. Die dazu erforderlichen Massnahmen und Einrichtungen sind bekannt bzw. liegen im
Ermessensbereich des mit der Materie vertrauten Fachmannes, so
dass sie an dieser Stelle nicht weiter erörtert zu werden brauchen.


Das Lagergebäude 1 ist in eine Anzahl von räumlich getrennten
Abteilungen gegliedert, welche in der Zeichnung schematisch mit
I, II, III und IV bezeichnet sind. Diese räumlich getrennten
Abteilungen sind in bezug auf klimatische, optische, thermische
usw. Bedingungen unterschiedlich ausgebildet; beim dargestellten
Ausführungsbeispiel kann eine Mehrzahl von Abteilungen I vorgesehen sein, welche durch dachseitig angeordnete Fenster 10 und
seitlich angeordnete Fenster 11 einer natürlichen Besonnung
ausgesetzt sind. Eine zweite, generell mit II bezeichnete Abteilung kann beispielsweise mit nicht näher dargestellten Wasser-Berieselungsanlagen zur Bewässerung der eingelagerten Pflanzen in
den Pflanzenträgern 3 versehen sein. Eine weitere Abteilung III ist z.B. als Dunkelzone ausgebildet, gegebenenfalls mit zweckentsprechend gewählter Klimatisierung. Eine letzte Abteilung IV kann mit einer Klimaanlage ausgerüstet sein, die wahlweise eine vorwählbare Temperatur gewährleistet, welcher die mit den Pflanzen versehenen Träger 3 ausgesetzt sind.

Zur Steuerung des Regalförderzeuges 7 sind nicht näher dargesetllte Steuermittel vorgesehen, die es gestatten, die Pflanzenträger 3 von einer der Abteilungen I - IV in eine zweckentsprechend gewählte Abteilung zu fördern. Dadurch ist sichergestellt bzw. erreichbar, dass eine bestimmte Pflanzensorte z.B. zuerst einer Besonnung, danach einer Berieselung durch Wasser, danach einer Ruheperiode und schliesslich einer Erwärmung ausgesetzt wird; es leuchtet ein, dass durch zweckentsprechende Wahl des Transportablaufes, der Zeitintervalle usw. für jede individuelle Pflanzenart die für deren Wachstum optimalen Umweltbedingungen vorgewählt werden können, ohne dass eine dauernde, manuell gesteuerte bzw. durchzuführende Überwachung erforderlich wäre. Hat ein Pflanzenträger oder haben mehrere Pflanzenträger das vorgesehene Reifestadium erreicht, können diese selbstätig zur Ausgabestation 2 abgerufen werden, wo sie zwecks Abtransport dem Wagen 5 zugeleitet werden.

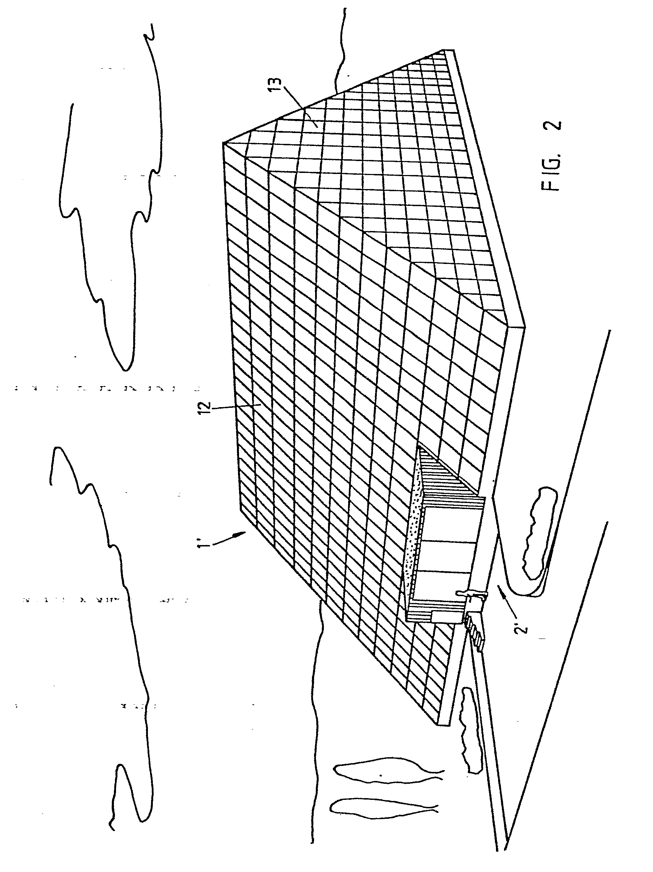

In der Fig. 2 ist ein weiteres Ausführungsbeispiel eines generell mit 1' bezeichneten Lagergebäudes dargestellt, welches gesamthaft über eine grössere Fensterfläche, gebildet durch schräg angeordnete, dachseitige Fenster 12 und durch stirnseitige Fenster 13, verfügt. Durch die gegenüber der Ausführung nach Fig 1 insgesamt grössere Fernsterfläche eignet sich eine solche Konstruktion in erster Linie zur Behandlung von Pflanzen, die eine intensive Besonnung benötigen.

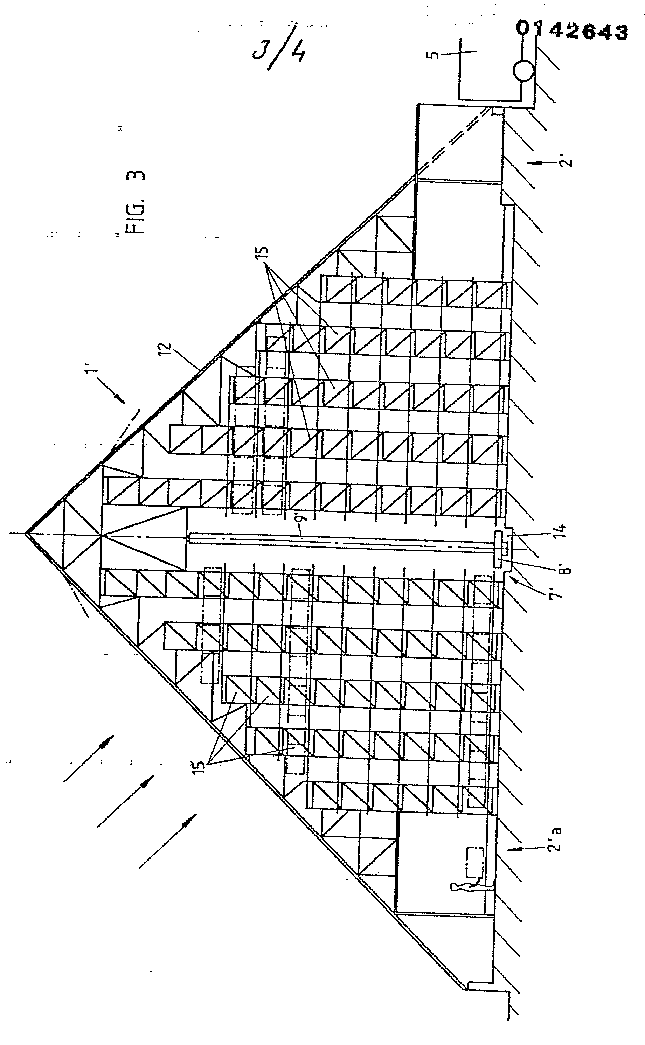

Die Ausgabestelle 2' für die fertig behandelten Pflanzen kann sich dabei auf der einen Seite des Gebäudes 1' befinden, während die Ausgabestelle 2'a (in Fig.2 nicht dargestellt, siehe Fig.3) auf der anderen Gebäudeseite liegt.

Aus dem Schnitt gemäss Fig. 3 ist die Anordnung der als Lagerregale 15 ausgebildeten Lagerplätze für die Pflanzenträger ersichtlich. Beim dargestellten Ausführungsbeispiel ist ein zentrales Regalförderzeug 7' vorgesehen, welches eine entlang einer Säule 9' heb- und senkbare Förderplattform 8' umfasst. Diese kann mit nicht näher bezeichneten Mitteln zur Aufnahme eines Pflanzenträgers bzw. zur Abgabe eines solchen in ein Regalfach sowie zur Aufnahme eines solchen aus einem Regalfach ausgerüstet sein. Das Regalförderzeug ist ebenfalls in einer Horizontalebene in zwei zueinander senkrechten Richtungen verfahrbar; eine Richtung ist durch die Erstreckung des in Fig.3 angedeuteten Ganges 14 gegeben.

Damit ist das Regalförderzeug 7' in der Lage, sämtliche Regalfächer zu bedienen, die beim gezeigten Beispiel in zwei Blöcken auf zehn Ebenen dreiundzwanzig Regalfachkanäle umfassen, somit gesamthaft 460 Kanäle mit zusammen 3220 Plätzen für Pflanzenträger. In Fig.3 sind diese Regalfachkanäle allgemein mit 15 bezeichnet und weisen ein dem Gang 14 zugewandtes Entnahme- bzw.

Beschickungsende auf. Diese Kanäle sind ebenfalls in unterschiedliche Zonen I - IV unterteilt, wobei natürlich eine Anpassung an die Bedürfnisse im Einzelfall erforderlich ist.

Wie schon einleitend erwähnt, können die Pflanzenträger einen Trog 20 umfassen, der je nach Art der Pflanzen in Bezug auf Grösse und/ oder Ausführung angepasst ist. Ein Ausführungsbeispiel eines Pflanzenträgers ist in den Fig. 4 und 5 dargestellt. Jeder Trog 20 ruht dabei auf einem innerhalb der gesamten Anlage identisch ausgebildeten Fahrschemel 21, sodass der gesamte Funktionsablauf innerhalb der Anlage weitgehend mechanisiert werden kann, da zur Steuerung der Arbeitsabläufe nur auf die physische Ausführung der Fahrschemel 21 Rücksicht genommen werden muss, ohne auf die Art des darauf aufgesetzten Troges 20 zu achten.

Im einzelnen besteht der Pflanzentrog 20 aus einer Wanne, z.B. aus Kunststoff, aus Eternit oder dgl. und weist im Bereich seiner Auflagefläche 22 Ausbuchtungen 23 auf, die so gelegen sind, dass Platz für die Räder 24 des Fahrschemels 21 geschaffen ist. Im Trog 20 ist in bekannter Weise eine Schicht von Erde 25 vorhanden, welche die Pflanzen 26 aufnimmt. Selbstverständlich kann der Trog 20 in Form und Ausführung an die aufzunehmenden Pflanzen angepasst sein; die Fig. 4 zeigt nur eine von vielen, möglichen Ausführungsvarianten.

Jedenfalls ist jede der möglichen Ausführungsformen des Troges 20 an den Fahrschemel 21 angepasst, in der Weise, dass der Trog problemlos auf den Fahrschemel aufsetzbar ist. Der Fahr-

0142643

schemel 21 seinerseits besteht, wie aus der Fig. 5 ersichtlich
ist, aus einem Rahmen, gebildet durch Querstreben 27 und doppelte Längsstreben 28, wobei zwischen je einem Längsstrebenpaar 28
Räder 24 drehbar eingesetzt sind. Innerhalb der gesamten Anordnung sind die Fahrschemel 21 identisch ausgebildet, können aber
mit verschiedenen Ausführungen von Pflanzentrögen 20 ausgerüstet werden. Damit ist sichergestellt, dass die Handhabung der
Pflanzenträger 3 als Ganzes, bestehend aus Fahrschemel 21 und
Trog 20, innerhalb des Umsetzungs- und Transportsystems einheitlich behandelt werden können, da sämtliche Hilfseinrichtungen der
Anordnung, wie Transportmittel, Steuermittel, Regalfächer, Schienen und dgl. nur an den einheitlichen Fahrschemel angepasst
werden müssen, der aber andererseits die verschiedenartigsten
Pflanzen in dem ihm zugeordneten Trog aufnehmen kann.

0142643

PATENTANSPRÜCHE

-----------------------------------

1. Anordnung für die Lagerung, die Behandlung und den Umschlag von Pflanzen, gekennzeichnet durch:

a) eine Mehrzahl von unter sich zumindest annähernd gleichen Pflanzenträgern (3) zur artsgruppenweisen Aufnahme einer Vielzahl von Einzelpflanzen (26);

b) ein Lagergebäude (1, 1'), das in eine Mehrzahl von räumlich getrennte Abteilungen (I, II, III, IV) gegliedert ist, welche je mit Mitteln (15) zur Aufnahme von zumindest einem Pflanzenträger (3) ausgerüstet sind und das eine Ein- und Ausgabestelle (2, 2', 2'a) für die Pflanzenträger umfasst;

c) Transportmittel (7, 8, 9 bzw. 7', 8', 9') zum Umschlag von Pflanzenträgern (3) zwischen den einzelnen, räumlich getrennten Abteilungen (I-IV) bzw. zwischen diesen und der Ein- und Ausgabestelle (2, 2', 2'a); sowie

d) Steuermittel zur Steuerung des Bewegungsablaufes der Transportmittel (7, 8, 9 bzw. 7', 8', 9') zwischen den einzelnen, räumlich getrennten Abteilungen (I-IV) bzw. zwischen diesen und der Ein- und Ausgabestelle (2, 2', 2'a).

0142643

2. Anordnung nach Anspruch 1, dadurch gekennzeichnet, dass die Pflanzenträger (3) zweiteilig ausgebildet sind, indem sie

- einen ersten, die einzelnen Pflanzen (26) aufnehmenden, als Trog (20) ausgebildeten Teil aufweisen, der in Art und/oder Grösse an die Pflanzen (26) angepasst ist, und

- einen zweiten, den Trog (20) abstützenden, innerhalb der Anlage zumindest funktionell identisch ausgebildeten Teil (21) aufweisen, auf welchen die einzelnen Tröge (20) aufsetzbar sind.

3. Anordnung nach Anspruch 2, dadurch gekennzeichnet, dass die zweiten, die Tröge (20) abstützenden Teile als Fahrschemel (21) mit einem Tragrahmen (27, 28) und vier Rollen (24) ausgebildet sind, wobei die funktionellen Abmessungen des Rahmens und die Anordnung der Rollen bei allen Fahrschemeln (21) identisch ist.

4. Anordnung nach einem der Ansprüche 1 - 3, dadurch gekennzeichnet, dass die Mittel zur Aufnahme des bzw. der Pflanzenträger (3) durch mit Schienen ausgerüstete Regalfächer (15) gebildet sind, welche die Pflanzenträger (3) aufzunehmen bestimmt und zumindest einseitig offen sind.

5. Anordnung nach Anspruch 4, dadurch gekennzeichnet, dass die Regalfächer (15) einseitig offene Einschub-Regalfächer sind, die durch ein frontseitig verfahrbares Regalförderzeug (7, 8, 9 bzw. 7', 8', 9') zwecks Einund Auslagerung bedienbar sind.

6. Anordnung nach Anspruch 4, dadurch gekennzeichnet, dass die Regalfächer (15) zweiseitig offene Durchlauf-Regalfächer sind, die durch ein Regalförderzeug (7 bzw. 7') rückseitig zwecks Einlagerung und durch dasselbe und/oder ein weiteres Regalförderzeug frontseitig zwecks Auslagerung bedienbar sind.

7. Anordnung nach Ansprüchen 5 oder 6, dadurch gekennzeichnet, dass die im Regalfach bzw. in den Regalfächern (15) angeordneten Schienen zur frontseitigen Öffnung hin geneigt angeordnet sind.

8. Anordnung nach mindestens einem der vorangehenden Ansprüche, dadurch gekennzeichnet, dass zumindest eine der räumlich getrennten Abteilungen (I) mit Fenstern (10, 11 bzw. 12, 13)) versehen ist.

9. Anordnung nach mindestens einem der vorangehenden Ansprüche, dadurch gekennzeichnet, dass zumindest eine der räumlich getrennten Abteilungen (III) verdunkelt ist.

10. Anordnung nach mindestens einem der vorangehenden Ansprüche, dadurch gekennzeichnet, dass zumindest eine der räumlich getrennten Abteilungen (IV) klimatisiert ist.

11. Anordnung nach mindestens einem der vorangehenden Ansprüche, dadurch gekennzeichnet, dass zumindest eine der räumlich getrennten Abteilungen (II) mit einer Wasser-Berieselungsvorrichtung versehen ist.

12. Anordnung nach mindestens einem der vorangehenden Ansprüche, dadurch gekennzeichnet, dass die Transportmittel zum Umschlag von Pflanzenträgern (3) durch mindestens ein an sich bekanntes, in einer Horizontalebene in zwei Richtung verfahrbares, heb- und senkbares Regalförderzeug (7, 7') gebildet sind.

13. Anordnung nach mindestens einem der vorangehenden Ansprüche, dadurch gekennzeichnet, dass die Steuermittel ein programmierbares, selbstätiges Zeitsteuerorgan umfassen, welches den Umschlag von ausgewählten Pflanzenträgern (3) von einer oder mehreren Abteilungen (I-IV) des Lagergebäudes (1, 1') in eine oder mehrere andere Abteilungen des Lagergebäudes bewirkt.

14. Anordnung nach mindestens einem der vorangehenden Ansprüche, dadurch gekennzeichnet, dass die Steuermittel ferner ein programmierbares, selbstätiges Zeitsteuerorgan zur wahlweisen Ein- und Ausschaltung von Heiz- und/oder Kühlaggregaten, Wasser-Berieselungsanlagen oder dgl. umfasst.

FIG. 1

1/4

0142643

FIG. 2

0142643

FIG. 3

0142643

FIG. 4

FIG. 5